# EUROPÄISCHE PATENTSCHRIFT

(11) **EP 0 256 970 B1**
(45) Veröffentlichungstag und Bekanntmachung des Hinweises auf die Patenterteilung: **16.06.1993**
(21) Anmeldenummer: 87730087.1
(22) Anmeldetag: 30.07.1987
(51) Int. Cl.: G01J 3/50

(54) **Vorrichtung zur schnellen Farbmessung an unterschiedlichen Proben**
Device for the fast colour measuring of different samples
Dispositif pour mesurer rapidement la couleur d'échantillons différents

(30) Priorität: 05.08.1986 DE 3626373
(43) Veröffentlichungstag der Anmeldung: 24.02.1988
(73) Patentinhaber: Kurandt, Fritz, D-12249 Berlin (DE)
(72) Erfinder: Kurandt, Fritz, D-12249 Berlin (DE)
(74) Vertreter: Pfenning, Meinig & Partner

(56) Entgegenhaltungen:
- EP-A- 0 081 702
- DE-A- 3 401 475
- DE-B- 2 313 528
- GB-A- 1 547 401
- IBM TECHNICAL DISCLOSURE BULLETIN, vol. 26, no. 9, Februar 1984, Seiten 4811-4812; H.E. KORTH: "Spectrophotometric Film and Color Analyzer"
- PATENT ABSTRACTS OF JAPAN, vol. 10, no. 38 (P-428)(2095), 14 Februar 1986; & JP-A-60186720
- PATENT ABSTRACTS OF JAPAN, vol. 8, no. 257 (P-316)(1694), 24 November 1984; & JP-A-59128417

## Beschreibung

Die Erfindung betrifft eine Vorrichtung zur Farbmessung an einer Probe nach dem Oberbegriff des Hauptanspruchs.

In zunehmendem Maße werden Fertigungsprozesse dadurch automatisiert und überwacht, daß die zu bearbeitenden Produkte zusätzlich Informationen in Form von Balkencodes, Farbpunkten, Farbringen und ähnlichem aufgeprägt bekommen. Die so gekennzeichneten Produkte tragen damit in verschlüsselter Form signifikante Daten mit sich, die den Fertigungsabluf und den Vertriebsweg bestimmen. Derartige Markierungen müssen mittels einer Abtasteinrichtung erfaßt werden. Einfarbige Balkencodes z.B. werden in bekannter Weise von Lichtschranken oder Reflexionsabtastern erkannt, bei denen eine Halbleiterdiode oder Miniaturglühlampe das Objekt beleuchtet und eine Photodiode erfaßt die reflektierte oder transmittierte Strahlung. Derartige bekannte Abtasteinrichtungen sind nicht geeignet, um mehrfarbige Markierungen zu erfassen und farblich zu unterscheiden. Eine Vorrichtung zur Farbmessung gemäß Oberbegriff des Anspruchs 1 ist aus dem IBM Technical Disclosure Bulletin, Vol. 26, No. 9, 1984, Seiten 4811-4812 bekannt. Aus dem Stand der Technik ist weiterhin ein Farberkennungssystem bekannt, bei dem als Lichtquellen Halogenlampen verwendet werden, die eine weiße Gleichlichtstrahlung erzeugen, mit der das zu messende Objekt angestrahlt wird. Über mehrere Photoempfänger, denen jeweils Farbfilter mit unterschiedlichen Durchlaßbereichen vorgeschaltet sind, werden die Farbmeßwerte gewonnen. Diese werden an einen Rechner gegeben, der die Auswertung und Zuordnung der vom Empfänger gelieferten Signale zu den einzelnen Farben vornimmt. Bei dieser bekannten Anordnung ist die Meßfeldbeleuchtung, d.h. der Sender relativ groß und erzeugt durch die Halogenlampen unerwünschte Wärme. Weiterhin ist ein Schutz vor Fremdlicht erforderlich, da dieses sonst von den Photoempfängern miterfaßt wird. Außerdem ist die Meßzeit von ca. 8 ms relativ lang.

Der Erfindung liegt die Aufgabe zugrunde, eine Vorrichtung zur schnellen Farbmessung an unterschiedlichen Proben gemäß dem Oberbegriff des Hauptanspruchs zu schaffen, die bei der Erfassung unterschiedlicher Farben schnelle Lesegeschwindigkeit aufweist und kompakt und wartungsfrei ausgebildet ist.

Diese Aufgabe wird erfindungsgemäß durch die kennzeichnenden Merkmale des Hauptanspruchs gelöst.

Der Sender gemäß der Erfindung weist mehrere Halbleiterstrahlungsquellen, vorzugsweise drei Lumineszenzdioden im blauen, grünen und roten Spektralbereich auf, deren optische Strahlung über eine Filtereinheit zusammengeführt und durch eine Linseneinheit auf die Probe gelenkt wird. Weiterhin ist eine Ansteuereinheit vorgesehen, die die einzelnen Halbleiterstrahlungsquellen nacheinander impulsweise ansteuert und ein photoelektrischer Emofänger empfängt die reflektierte oder transmittierte Strahlung, wobei ein von der Ansteuereinheit geliefertes Signal eine Zuordnung der Empfängersignale zu der in den unterschiedlichen Spektralbereichen abgesandten Strahlung erlaubt. Durch diese erfindungsgemäße Anordnung kann eine äußerst schnelle Farberfassung erzielt werden, da der Meßzyklus für alle drei Farben weniger als 100 µs betragen kann. Die optische Auflösung ist sehr groß, so daß auch kleine Zeichen erfaßt werden können. Durch die Verwendung von Halbleiterlichtquellen kann die erfindungsgemäße Anordnung sehr kompakt und wartungsfrei aufgebaut werden, wobei Fremdlicht die Messungen nicht wesentlich oder gar nicht beeinträchtigt.

Durch die in den Unteransprüchen angegebenen Maßnahmen sind vorteilhafte Weiterbildungen und Verbesserungen möglich.

Besonders vorteilhaft ist die Verwendung von dichroitischen Spiegeln, das heißt von Farbtrennungsfiltern, vorzugsweise eines Blauspiegels und eines Rotspieiegels, wodurch eine einfache Zusammenführung der Strahlungen der verschiedenen Halbleiterstrahlungsquellen auf eine Linsenanordnung möglich wird. Durch die Anordnung der Spiegel in einem Winkel von 45° zu den Halbleiterstrahlungsquellen ist eine Umlenkung der roten und der blauen Strahlung gewährleistet, während die grüne Strahlung durch die Spiegel hindurchgelassen wird.

Eine vorteilhafte Ausgestaltung ist,daß die Erregerleistung bei der impulsweisen Ansteuerung der einzelnen Halbleiterstrahlungsquellen getrennt vorgebbar ist, so daß die einzelnen Strahlungsquellen so kalibriert werden können, daß sie an einem Normal definierte Meßwerte am Strahlungsempfänger erwirken.

Dadurch, daß der Sender und Empfänger in einem Gehäuse untergebracht ist und ihre Zuordnung in dem Gehäuse in der Weise vorgenommen ist, daß der Empfänger im Winkel von 45° zu der vom Sender abgesandten Strahlung liegt, wird ein farbtüchtiger Abtastkopf zur Verfügung gestellt, der besonders klein und wartungsfrei ist.

Ein Ausführungsbeispiel der Erfindung ist in der Zeichnung dargestellt und wird in der nachfolgenden Beschreibung näher erläutert. Es zeigen:
- Fig. 1: die prinzipielle Anordnung der Halbleiterstrahlungsquellen, der Filtereinheit und der Linsenanordnung des Senders,
- Fig. 2: die Beschaltung des Empfängers,
- Fig. 3: ein Blockschaltbild für die Auswerte- und Ansteuereinheit,
- Fig. 4: die Durchlaßkennlinien der dichroitischen Spiegel,
- Fig. 5: die Lage der Emissionsspektren der bei einem Ausführungsbeispiel verwendeten Leuchtdioden, und
- Fig. 6: den Farbmeßkopf gemäß der vorliegenden Erfindung.

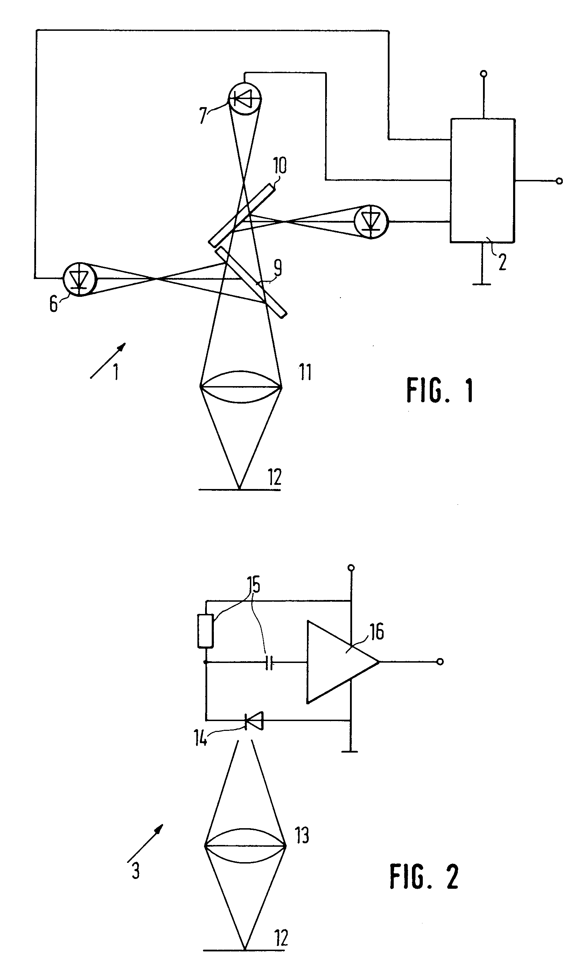

Die Vorrichtung zur schnellen Farbmessung von unterschiedlichen Proben besteht aus einem Sender 1, der mit einer Ansteuereinheit 2 verbunden ist, einem Empfänger 3 mit nachgeschalteter Auswerteeinheit 4, 5 und einem an die Auswerteeinheit angeschlossenen Rechner. Der Sender 1 gemäß Fig. 1 weist drei Leuchtdioden 6, 7, 8 auf, wobei Diode 6 im blauen, Diode 7 im grünen und Diode 8 im roten Spektralbereich abstrahlt. Die Lage der Emissionsspektren der Lumineszenzdioden 6, 7, 8 ist in Fig. 5 dargestellt, wobei zu erkennen ist, daß die Maxima der ausgesandten Strahlungen bei etwa 480 nm (blau), 555 nm (grün) und 670 nm (rot) liegen. In den Strahlengang der Lumineszenzdioden 6, 7, 8 sind zwei dichroitische Spiegel 9, 10 bildende Farbtrennungsfilter geschaltet, die zu der Abstrahlrichtung der blauen und roten Lumineszenzdiode 6, 8 im Winkel von 45° liegen, so daß die blaue Strahlung der Lumineszenzdiode 6 an dem "Blauspiegel" 9 umgelenkt und die rote Strahlung der Lumineszenzdiode 8 an dem "Rotspiegel" 10 umgelenkt wird und durch den"Blauspiegel" 9 durchgelassen wird. Die grüne Strahlung von der Lumineszenzdiode 7 wird sowohl durch den "Rotspiegel" 10 als auch durch den "Blauspiegel" 9 durchgelassen, so daß die Strahlungen der einzelnen Dioden zu einer Strahlung zusammengeführt werden. Diese Strahlung wird durch eine Linsenanordnung 11 auf oder durch die zu messende Probe 12 gelenkt. Dabei sind die einzelnen optischen Elemente, d.h. die Lumineszenzdioden 6, 7, 8, die dichroitischen Spiegel 9, 10 und die Linsenanordnung 11 in der Weise justiert, daß die einzelnen Strahlen sich in einem Punkt treffen, an der sich die Probe 12 befinden muß.

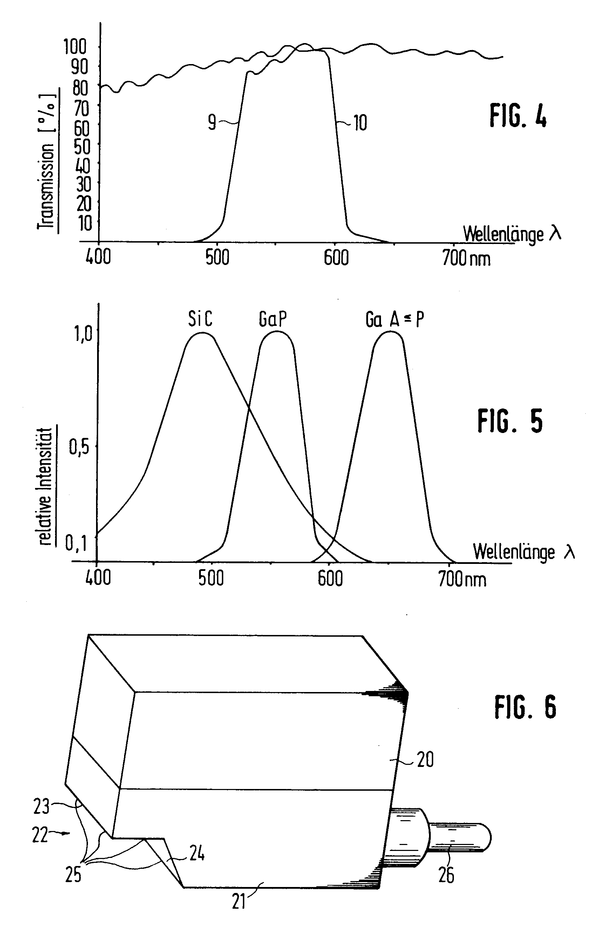

Fig. 4 zeigt die Durchlaßkurven der dichroitischen Spiegel 9, 10, wobei zu erkennen ist, daß der "Blauspiegel" 9 die Strahlung ab einer Wellenlänge von ca. 510 nm durchläßt, d.h. im blauen Bereich wird die Strahlung reflektiert. Entsprechendes gilt für den "Rotspiegel" 10, der die Strahlung bis ca. 610 nm durchläßt und den roten Bereich sperrt. Das bedeutet, daß durch den "Blauspiegel" 9 sowohl die grüne als auch die rote Strahlung durchgelassen wird, während durch den "Rotspiegel" 10 die grüne und die blaue Strahlung durchgelassen wird.

Die Zusammenführung der Strahlungen der drei Lumineszenzdioden 6, 7, 8 kann auch auf andere Weise geschehen, beispielsweise mittels Strahlungsteilerplatten und Prismenwürfel, die beschriebene Anordnung bildet aber das bevorzugte Ausführungsbeispiel.

Der Empfänger 3 gemäß Fig. 2 weist eine Empfängeroptik 13 auf, die das von der Probe 12 reflektierte oder transmittierte Licht sammelt und auf den eigentlichen Photoempfänger 14, der beispielsweise als Photodiode ausgebildet sein kann, bringt. Der Photoempfänger 14 ist derart ausgewählt, daß er eine kurze Ansprechzeit und eine hohe Quantenausbeute hat. Der Photoempfänger 14 ist mit einem mit einem Hochpaß 15 beschalteten Signalverstärker 16 verbunden, der niederfrequente Fremdlichteinstreuungen, beispielsweise von Leuchtstofflampen, unterdrückt.

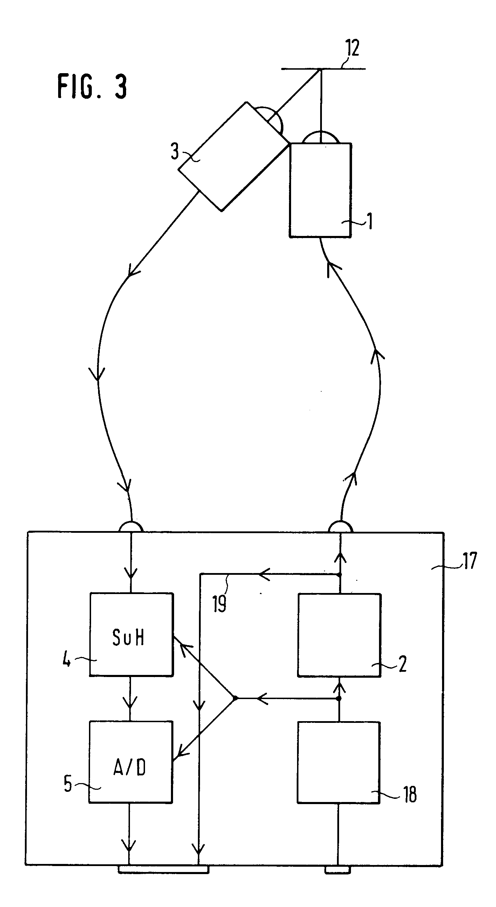

In Fig. 3 ist die Ansteuer- und Auswerteeinheit 17 dargestellt, die selbstverständlich eine Stromversorgung 18 aufweist. Die Ansteuereinheit 2 steuert den Sender 1 impulsweise an, d.h. jede Lumineszenzdiode erhält nacheinander einen Erregungsimpuls festgelegter Einschaltzeit, wobei drei Impulse einen Zyklus bestimmen, d.h. bei jedem Zyklus wird jede Lumineszenzdiode 6, 7, 8 einmal angesprochen und sendet jeweils einen Lichtimpuls aus. Die Ansteuerlogik weist hierzu einen Taktgeber auf.

Außerdem sendet die Ansteuerlogik 2 ein Synchronisiersignal aus, das über die Leitung 19 am Ausgang der Ansteuer- und Auswerteeinheit zur Verfügung steht. Die von der Probe reflektierten oder transmittierten Strahlungsimpulse hoher Frequenz werden von dem Empfänger 3 erfaßt und in elektrische Impulse umgewandelt, die der Auswerteeinheit zugeführt werden, wobei diese eine Sample- und Hold-Schaltung 4 aufweist, die die vom Signalverstärker 16 ankommenden Impulse für die Dauer einer Zykluszeit speichert. Der Sample- und Hold-Schaltung 4 ist ein A/D-Wandler 5 nachgeschaltet, der die unterschiedlichen Spannungen entsprechenden Farbmeßwerte in digitale Werte, beispielsweise in 8-Bit-Werte umwandelt. Diese digitalen Werte stehen am Ausgang der Ansteuer- und Auswerteeinheit zur Verfügung und werden einem nicht dargestellten Rechner zugeführt, der mit Hilfe des Synchronisiersignals eine Zuordnung der Meßwerte vornimmt und diese weiterverarbeitet.

Da der Wirkungsgrad der Lumineszenzdioden 6, 7, 8 unterschiedlich ist und auch Dioden gleicher Spektralbereiche Toleranzen aufweisen, ist die Ansteuereinheit 2 derart ausgebildet, daß die Erregerleistung, d.h. Dauer und Höhe der Ansteuerimpulse auf die einzelnen Lumineszenzdioden 6, 7, 8 getrennt vorgebbar ist. Beispielsweise wird die Erregerleistung der jeweiligen Lumineszenzdioden 6, 7, 8 so eingestellt, daß bei Verwendung eines Normals, beispielsweise eines Weiß-Normals aus Barium-Sulfat bei der Reflexionsmessung definierte Ausgangsspannungen, beispielsweise 2 V, am Empfänger 3 vorhanden sind.

Für die Messung einer Probe wird das Ergebnis von jeweils einem Lichtimpuls jeder Lumineszenzdiode 6, 7, 8 benötigt, so daß das einmalige serielle Einschalten aller Lumineszenzdioden einen Meßzyklus darstellt und die minimale Meßzeit der Zykluszeit entspricht. Dieser Meßzyklus beträgt bei der vorliegenden Erfindung ≦ 100 µs, so daß sehr schnelle Messungen durchgeführt werden können.

In Fig. 6 ist ein bei der erfindungsgemäßen Vorrichtung verwendeter Farbmeßkopf dargestellt, in dessen Gehäuse 20 sowohl der Sender 1 und Empfänger 3 als auch die Ansteuer-und Auswerteeinheit 17 aufgenommen sind Eine Anschlußleitung 26 führt zu dem nicht dargestellten Rechner. Dieser Farbmeßkopf ist für Remissionsmessungen zu verwenden, wobei auch Transmissionsmessungen durchgeführt werden können, wenn hinter der transparenten Probe ein Spiegel angeordnet ist. Die Grundfläche 21 des Gehäuses 20 ist mit einem Absatz 22 versehen, so daß sich eine parallel zur Grundfläche 21 liegende Fläche 23 ergibt und eine die Fläche 23 mit der Grundfläche 21 verbundene schräge Fläche 24 gebildet wird. In den Flächen 23, 24 sind jeweils die Durchtrittsöffnungen zu dem Sender und Empfänger bzw. die Linsenanordnung 11, 13 für den Sender und Empfänger vorgesehen. Die schräge Fläche 24 weist vorzugsweise einen derartigen Winkel auf, daß die Remissionsmessung unter 45° vorgenommen werden kann. Der Abstand zwischen der Grundfläche 21 des Farbmeßkopfes und der Unterlage, auf der die Probe 12 liegt, muß so gewählt werden, daß der Leuchtfleck 25 so klein wie möglich ist, nämlich vorzugsweise einen Durchmesser von 1 mm aufweist. Dieser Abstand kann durch Justierscheiben ausgefüllt werden, die unter die Grundfläche 21 zu legen sind.

## Patentansprüche

1. Vorrichtung zur Farbmessung an einer Probe (12) mit einem mehrere Halbleiterstrahlungsquellen (6,7,8) unterschiedlicher Spektralbereiche auf die Probe (12) fokussierenden Sender (1), wobei die Strahlungsquellen sequentiell ansteuerbar sind, einem einzigen Empfänger (3) zum Empfangen der von der Probe (12) reflektierten Strahlung und einem Rechner zur Auswertung (17) der vom Empfänger (3,14) gelieferten Signale,
**dadurch gekennzeichnet,**
daß die sequentielle Ansteuerung der Halbleiterstrahlungsquellen (6,7,8) impulsweise erfolgt, wobei diese in den Farben blau, grün und rot senden, daß eine Filteranordnung aus zwei dichroitischen Spiegeln (9,10) die Strahlung zusammengefügt durch eine Linsenanordnung (11,13) auf die Probe (12) lenkt und daß die Halbleiterstrahlungsquellen (6,7,8) derart kalibrierbar sind, daß sie bei Verwendung eines Normals definierte Meßwerte zum Empfänger (3) vorgeben.

2. Vorrichtung nach Anspruch 1, dadurch gekennzeichnet, daß die Halbleiterstrahlungsquellen (6,7,8) als Lumineszenzdioden ausgebildet sind, die im roten, grünen und blauen Spektralbereich Strahlung aussenden.

3. Vorrichtung nach Anspruch 1 oder 2, dadurch gekennzeichnet, daß die Filtereinheit dichroitische Spiegel (9,10) aufweist.

4. Vorrichtung nach Anspruch 4, dadurch gekennzeichnet, daß mindestens zwei dichroitische Spiegel (9,10) vorgesehen sind, vorzugsweise ein im roten und ein im blauen Spektralbereich reflektierender Spiegel, und daß die Spiegel (9,10) jeweils im Winkel von 45^{o} zu den Richtungen der von den einzelnen Halbleiterstrahlungsquellen (6,7,8) ausgesandten Strahlung liegen.

5. Vorrichtung nach Anspruch 1 oder 2, dadurch gekennzeichnet, daß die Filtereinheit Strahlungsteilerplatten aufweist.

6. Vorrichtung nach einem der Ansprüche 1 bis 5, dadurch gekennzeichnet, daß die Halbleiterstrahlungsquellen (6,7,8), die Filtereinheit (9,10) und die Linsenanordnung (11) in der Weise justiert sind, daß alle Einzelstrahlen sich in einem Punkt treffen, wobei der Durchmesser des Leuchtflecks der jeweiligen Probe (12) anpaßbar ist.

7. Vorrichtung nach Anspruch 6, dadurch gekennzeichnet, daß der Leuchtfleck einen Durchmesser von etwa 1 mm aufweist.

8. Vorrichtung nach einem der Ansprüche 1 bis 7, dadurch gekennzeichnet, daß der Sender (1) und Empfänger (3) in einem Gehäuse (20) angeordnet sind, wobei der Empfänger (3) im Winkel von 45^{o} zu der auf die Probe (12) gerichteten Strahlung liegt.

9. Vorrichtung nach einem der Ansprüche 1 bis 8, dadurch gekennzeichnet, daß die Erregerleistungen für die einzelnen Halbleiterstrahlungsquellen (6,7,8) des Senders (1) getrennt vorgebbar sind.

10. Vorrichtung nach einem der Ansprüche 1 bis 9, dadurch gekennzeichnet, daß für einen Meßzyklus der Probe (12) jede Halbleiterstrahlungsquelle (6,7,8) mindestens einmal durch einen Impuls angesteuert wird.

## Claims

1. Device for measuring colours on a probe (12), comprising an emitter which focusses on the probe (12) a plurality of semi-conductor radiation sources (6, 7, 8) of different spectral ranges, wherein the radiation sources are sequentially controlled, a single receiver (3) for receiving radiation deflected from the probe (12), and a computer for evaluation (17) of signals delivered by the receiver (3, 14), **characterised in that** the sequential control of the semi-conductor radiation sources (6, 7, 8) is pulsed, wherein these emit in the colours blue, green and red, that a filter arrangement of two dichroic mirrors (9, 10̸) assembles the radiation and directs it through a lens arrangement (11, 13) to the probe (12), and that the semi-conductor radiation sources (6, 7, 8) can be calibrated in such a manner that, with the use of a normal, defined measuring values are fed to the receiver (3).

2. Device according to claim 1, **characterized in that** the semi-conductor radiation sources (6, 7, 8) are arranged as luminescence diodes which emit radiation in the red, green and blue spectral range.

3. Device according to claim 1 or 2, **characterized in that** the filter unit comprises dichroic mirrors (9, 10̸).

4. Device according to claim 4, **characterized in that** at least two dichroic mirrors (9, 10̸ are provided, preferably one mirror reflecting in the red spectral range and one in the blue spectral range, and that the mirrors (9, 10̸) are positioned at an angle of 45° to the directions of the radiation emitted by the individual semi-conductor radiation sources (6, 7, 8 .

5. Device according to claim 1 or 2, **characterized in that** the filter unit comprises radiation-divider plates.

6. Device according to one of claims 1 to 5, **characterized in that** the semi-conductor radiation sources (6, 7, 8), the filter unit (9, 10̸) and the lens arrangement (11) are adjusted in such a manner that all individual beams coincide in one point, in which respect the diameter of the light spot can be matched to the respective probe (12).

7. Device according to claim 6, **characterized in that** the light spot has a diameter of approximately 1 mm.

8. Device according to one of claims 1 to 7, **characterized in that** the emitter (1) and the receiver (3) are arranged in a housing (20), wherein the receiver (3) is positioned at an angle of 45° to the beam which is directed at the probe (12).

9. Device according to one of claims 1 to 8, **characterized in that** the exciter outputs for the individual semi-conductor radiation sources (6, 7, 8) of the emitter (1) are separately delivered.

10. Device according to one of claims 1 to 9, **characterized in that** for a measuring cycle of the probe (12) each semi-conductor radiation source (6, 7, 8) is controlled at least once by the pulse.

## Revendications

1. Dispositif pour la colorimètrie sur un échantillon (12), avec un émetteur (1) focalisant sur l'échantillon (12) plusieurs sources de rayonnement à semi-conducteur (6, 7, 8) de domaines spectraux différents, les sources de rayonnement pouvant être commandées de manière séquentielle, et avec un seul récepteur (3) pour recevoir le rayonnement réfléchi par l'échantillon (12), et un ordinateur pour l'évaluation (17) des signaux fournis par le récepteur (3, 14),
caractérisé en ce que,
la commande séquentielle des sources de rayonnement à semi-conducteur (6, 7, 8) se fait par impulsions, avec une émission dans les couleurs bleue, verte et rouge, en ce qu'une disposition de filtres comportant deux miroirs dichroïques (9, 10) réunit le rayonnement, qui est dirigé sur l'échantillon (12) par l'intermédiaire d'une disposition de lentilles (11, 13), et en ce que les sources de rayonnement à semi-conducteur (6, 7, 8) peuvent être étalonnées de telle manière qu'elles fournissent au récepteur (3) lors de l'utilisation d'un étalon, des valeurs mesurées définies.

2. Dispositif selon la revendication 1, caractérisé en ce que les sources de rayonnement à semi-conducteur (6, 7, 8) sont conçues sous la forme de diodes luminescentes, qui émettent un rayonnement dans le domaine spectral rouge, vert et bleu.

3. Dispositif selon la revendication 1 ou 2, caractérisé en ce que l'unité de filtrage présente des miroirs dichroïques (9, 10).

4. Dispositif selon la revendication 3, caractérisé en ce qu'il est prévu au moins deux miroirs dichroïques (9, 10), de préférence un miroir réfléchissant dans le domaine spectral rouge et un miroir réfléchissant dans le domaine spectral bleu, et en ce que les miroirs (9, 10) sont chaque fois disposés avec un angle de 45° par rapport aux directions du rayonnement émis par les sources de rayonnement individuelies à semi-conducteurs (6, 7, 8).

5. Dispositif selon la revendication 1 ou 2, caractérisé en ce que l'unité de filtrage présente des lames séparatrices de rayonnement.

6. Dispositif selon l'une quelconque des revendications 1 à 5, caractérisé en ce que les sources de rayonnement à semi-conducteur (6, 7, 8), l'unité de filtrage (9, 10) et la disposition de lentilles (11) sont ajustées de telle manière que tous les rayons individuels se rencontrent en un point, le diamètre du point lumineux de l'échantillon (12) concerné pouvant ainsi être adapté.

7. Dispositif selon la revendication 6, caractérisé en ce que le point lumineux présente un diamètre d'environ 1 mm.

8. Dispositif selon l'une quelconque des revendications 1 à 7, caractérisé en ce que l'émetteur (1) et le récepteur (3) sont disposés dans un carter (20), le récepteur (3) étant situé à un angle de 45° par rapport au rayonnement dirigé sur l'échantillon (12).

9. Dispositif selon l'une quelconque des revendications 1 à 8, caractérisé en ce que les puissances d'excitation pour les sources de rayonnement individuel les à semi-conducteur (6, 7, 8) de l'émetteur (1) peuvent être prédéfinies séparément.

10. Dispositif selon l'une quelconque des revendications 1 à 9, caractérisé en ce que, pour un cycle de mesure de l'échantillon (12), chaque source de rayonnement à semi-conducteur (6, 7, 8) est commandée au moins une fois par une impulsion.
